# EUROPÄISCHE PATENTANMELDUNG

(11) **EP 0 707 171 A1**
(43) Veröffentlichungstag der Anmeldung: **17.04.1996**
(21) Anmeldenummer: 95114894.9
(22) Anmeldetag: 21.09.1995
(51) Int. Cl.: F16L 37/23

(54) **Kupplung**

(30) Priorität: 11.10.1994 DE 4436144; 01.07.1995 DE 19524031
(71) Anmelder: CARL KURT WALTHER GmbH & Co. KG, D-42327 Wuppertal (DE)
(72) Erfinder: Kaul, Wolfgang, Dr., D-42369 Wuppertal (DE)
(74) Vertreter: Rieder, Hans-Joachim, Dr.

(57) **Zusammenfassung**

Die Erfindung betrifft eine Kupplung zur Verbindung von Leitungen, insbesondere medienführenden Leitungen, bestehend aus zueinander in Steckverbindung bringbaren Kupplungshälften (I, II), von denen die eine eine auf dem Gehäuse (5) ihrer Kupplungshälfte (II) axial verschiebliche Betätigungshülse (4) zur Verriegelung der zusammengesteckten Position beider Kupplungshälften (I, II) aufweist, welche (4) in ihrer Freigabestellung über eine Rasteinrichtung (R) derart verrastet ist, daß das Einstecken der anderen Kupplungshälfte (I) diese Verrastung aufhebt und die Betätigungshülse (4) zum federbelasteten Übertritt in die Verriegelungsposition freigibt, in welcher die Betätigungshülse (4) Verriegelungsmittel (12) beaufschlagt, die am Stecknippel (3) der eingesteckten Kupplungshälfte (I) verriegelnd eingreifen, und schlägt zur Erzielung einer baulich vereinfachten Lösung vor, daß die Verriegelungsmittel (12) Steuerteile ("Befehlsgeber") der Rasteinrichtung (R) sind.

## Beschreibung

Die Erfindung bezieht sich auf eine Kupplung zur Verbindung von Leitungen, insbesondere medienführender Rohrleitungen, bestehend aus zueinander in Steckverbindung bringbaren Kupplungshälften, von denen die eine eine auf dem Gehäuse ihrer Kupplungshälfte axial verschiebliche Betätigungshülse zur Verriegelung der zusammengesteckten Position beider Kupplungshälften aufweist, welche in ihrer Freigabestellung über eine Rasteinrichtung derart verrastet ist, daß das Einstecken der anderen Kupplungshälfte diese Verrastung aufhebt und die Betätigungshülse zum federbelasteten Übertritt in die Verriegelungsposition freigibt, in welcher die Betätigungshülse Verriegelungsmittel beaufschlagt, die am Stecknippel der eingesteckten Kupplungshälfte verriegelnd eingreifen.

Eine Kupplung dieser Art ist durch die EP-PS 0122404 bekannt. Die die Betätigungshülse zurückhaltende Rasteinrichtung erstreckt sich als separate Funktionseinheit hinter dem mit dem Stecknippel zusammenwirkenden Verriegelungsmittel. Beide Einrichtungen verwenden Sperrkugeln, wobei der Rasteinrichtung ein radial orientierter Riegel zugeordnet ist, der unter Belastung einer im Sinne des Verriegelns beaufschlagenden Druckfeder steht.

Aufgabe der Erfindung ist es, die gattungsgemäße Kupplung im Hinblick auf eine Vereinfachung der Rasteinrichtung zu verbessern.

Gelöst ist diese Aufgabe durch die im Anspruch 1 angegebene Erfindung.

Die daran anschließenden Ansprüche geben bevorzugte Gestaltungsmerkmale an.

Zufolge solcher Ausgestaltung ist eine gattungsgemaße Kupplung bezüglich der die Verriegelungshülse zurückhaltenden Rasteinrichtung wesentlich verbessert. Die Mittel hierzu sind einfach und zweckmäßig und bestehen praktisch in einer Integration beider Einrichtungen, indem nun die Verriegelungsmittel zugleich Steuerteile ("Befehlsgeber") der Rasteinrichtung sind. Die Befehlsgebung geschieht von innen her in Auswärtsrichtung. Sie ist von Nebenkräften frei und bei entsprechend gleichwinkliger Verteilung der Verriegelungsmittel auch ausgewogen, zumal die Steuerung erst bei geführter Koaxialität der Kupplungsteile korrekt einsetzt. Auch in baulicher Hinsicht liegen Vorteile vor. Man kommt mit weniger Teilen aus und braucht keinerlei Einbuße in Bezug auf die Funktionssicherheit hinzunehmen. Außerdem wird das bauliche Grundprinzip des betätigungshülsenseitigen Ausweichraumes nicht verlassen. Vielmehr wird dieser Ausweichraum nun zur Unterbringung der Rasteinrichtung mitgenutzt. Das sieht konkret so aus, daß die Rastmittel der Rasteinrichtung aus wenigstens einem Rastfinger bestehen, der, in der Betätigungshülse radial verschieblich, im Bewegungsbereich des Verriegelungsmittels, liegt. Über letzteres, zweckmäßig eine Kugel, wird der Rastfinger aus seiner rastierenden Stellung gedrängt. Die Betätigungshülse, fungierend als sogenannte Verriegelungshülse, schnellt vor. Es kommt zur Verrieglung der zusammengesteckten Position der Kupplungshälften. Weiter erweist es sich als vorteilhaft, daß der Rastfinger aus einer zum Inneren der Betätigungshülse hin offenen Vertiefung ragt und in eine Rastnische der die Betätigungshülse tragenden Kupplungshälfte durch Federbelastung eingreift. Vertiefung und Rastnische können rotationssymmetrisch gestaltet sein, also von Ringnuten gebildet sein, dies insbesondere, wenn mehrere Rastfinger verwirklicht sind. Zweckmäßig werden drei im wesentlichen winkelgleich beabstandete Rastfinger realisiert. Eine baulich vorteilhafte Maßnahme besteht darin, daß jeder Rastfinger als Randabwinklung eines in der Vertiefung liegenden Ringes aus federndem Material gestaltet ist und daß das als Kugel realisierte Verrieglungsmittel auf die innere Umfangsfläche des Ringes drückt. Der Ring weist vorzugsweise eine seinen umschmiegenden Umgriff begünstigende Vorspannung auf. Weiter ist es von Vorteil, daß der Ring durch einen Ringspalt unterbrochen ist und unter ständiger elastischer Verspannung auf dem Gehäuse sitzt. Er läßt sich so bequem zuordnen. Die Spaltgröße berücksichtigt den Bewegungsbedarf für die maximale Eintauchtiefe der Rastfinger in die Rastnische. Weiter wird vorgeschlagen, daß die Rastfinger sich nur über Teilbereiche des Ringumfanges erstrecken. Das führt zu besonders federfähigen Zwischenräumen, da hier mehr die Dicke des den Ring bildenden Bandes vorliegt. Günstig ist es, wenn der oder die Rastfinger als Profilierungsabschnitt der Umfangsfläche des Ringes gestaltet ist bzw. sind. Die entsprechende Polydirektionalität von Wandungsabschnitten führt zu besonders gebrauchsstabilen, die Rastfinger bildenden Vorsprüngen. Außerdem wird die Federfähigkeit im Bereich der Rastfinger praktisch neutralisiert. Um einerseits eine möglichst großflächige betätigungshülsenseitige Abstützung des Ringes zu bekommen, andererseits aber bedarfsweise auch eine härtere Federung zu erzielen, wird weiter vorgeschlagen, daß der Ring an der dem Rastfinger abgewandten Seite einen von einer Gegenabwinklung des Ringes gebildeten Stützkragen aufweist. Alternativ wird in Vorschlag gebracht, daß die Rastfinger an einem L-profilierten Kunststoffring ausgebildet sind und der die Rastfinger bildende kürzere L-Schenkel spaltseitig auf die Dicke des längeren L-Schenkels auskeilt. Diese Version erweist sich als besonders preisgünstig. Weiter besteht eine vorteilhafte Ausgestaltung darin, daß die Betätigungshülse in ihrer vorgeschobenen Position gegen einen Anschlag tritt, der in eine Ringnut des Gehäuses eingesprengt ist, wobei die Breite der Ringnut kleiner ist als die in Achsrichtung liegende Eingriffslänge der Rastfinger. Das begünstigt die Montage und Demontage; es kommt nicht zu einem Verhaken der Rastfinger in der Ringnut. Um eine betätigungshülsenseitige Abstützung des Ringes auch ohne eine versteifend wirkende Gegenabwinklung zu erhalten, wird in Vorschlag gebracht, daß der Ring eine von der Kreisform abweichende Krümmung besitzt derart, daß eine Teillänge sich über den kleinsten und eine Teillänge sich über den größeren Durchmesser der Anlagefläche der Betätigungshülse erstreckt. Die entsprechend unrunde Form des Ringes führt zu ansteigend radial gehenden Überdeckungen und somit gut tragenden bzw. abstützenden Zonen. Hier braucht nicht einmal eine überwiegend ringförmige Gestalt zugrundezuliegen; es genügt praktisch schon ein einen Viertelkreis abdeckendes Bogenstück. Dabei reicht sogar ein Rastfinger aus. Das Bogenstück braucht lediglich gegen Wandern gesichert zu sein, um die Steuerwirkung durch das Verriegelungsmittel, die Kugel also, nicht zu verlieren. Bevorzugt wird allerdings eine Lösung dahingehend, daß die Gesamterstreckung des Ringes etwa eine Hufeisenform darstellt. Das ergibt eine relativ große abstützende Überdeckung im Scheitelbereich dieses Gebildes und etwas kürzer ausfallende Überdeckungen im dem Ringspalt zugewandten Bereich. Um eine hobelnde Wirkung bei einer sonst freien Drehbarkeit der Kupplung zu vermeiden, wird weiter so vorgegangene, daß die dem Ringspalt zugewandten Enden des Ringes wieder auf die Richtung der Kreisform eingebogen bzw. -gewinkelt sind. Das bringt überdies eine gute periphere Abstützung des Ringes. Bezüglich der Ausbildung der Rastfinger erweist es sich noch als günstig, daß diese aus freigeschnittenen und eingedrückten Ringfeldern bestehen. Der entsprechende Freischnitt erhält eine durchgehend praktisch gleichwertige Federfähigkeit des Ringes auch in den Bereichen der Rastfinger. Eine in diesem Sinne ebenfalls vorteilhafte Maßnahme besteht an gedrehten metallischen oder aus Kunststoff bestehenden Ringen darin, daß der L-profilierte Ring im Bereich seines kürzeren L-Schenkels durch reihenförmig nebeneinander liegende Schlitze unterteilt ist, welche bis in den längeren L-Schenkel reichen. Trotz der im allgemeinen versteifend wirkenden L-Form ist die Federfähigkeit durch die genannte Maßnahme begünstigt. Weiter besteht noch eine vorteilhafte Ausgestaltung dadurch, daß der Innenscheitel der L-Schenkel zu einer Kehle ausgefüllt ist. Hierdurch wird die größerer mechanischer Beanspruchung unterliegende Zone des Ringes, der Rastfinger also, stabilisiert. Schließlich wird noch vorgeschlagen, daß die Rastnische ganz oder teilweise den Raumbereich der konischen Aufnahmen überdeckt. Die diesbezügliche Verbreiterung der Rastnische erweist sich sowohl für das Montieren als auch Demontieren als vorteilhaft und vermeidet überdies das Entstehen scharfer Durchdringungskanten zwischen Rastnische und den konischen Aufnahmen. Besagte Maßnahme ist vor allem im Hinblick auf größer dimensionierte Kupplungen von Bedeutung. Endlich erweist es sich noch als günstig, daß die Rastnische an der in Steckrichtung tieferliegenden Flanke einen Schrägauslauf aufweist. So kann es beispielweise bei ungünstigen Toleranzfeldfestlegungen nicht zu Bewegungsbehinderungen kommen.

Der Gegenstand der Erfindung ist nachstehend anhand mehrerer Ausführungsbeispiele näher erläutert. Es zeigt:
- Fig. 1: die erfindungsgemäß gestaltete Kupplung in Entkupplungsstellung bei in abgestützter Rückverlagerungsposition befindlicher Betätigungshülse,
- Fig. 2: die Kupplung in Kupplungsstellung mit in die Verriegelungsstellung getretener Betätigungshülse,

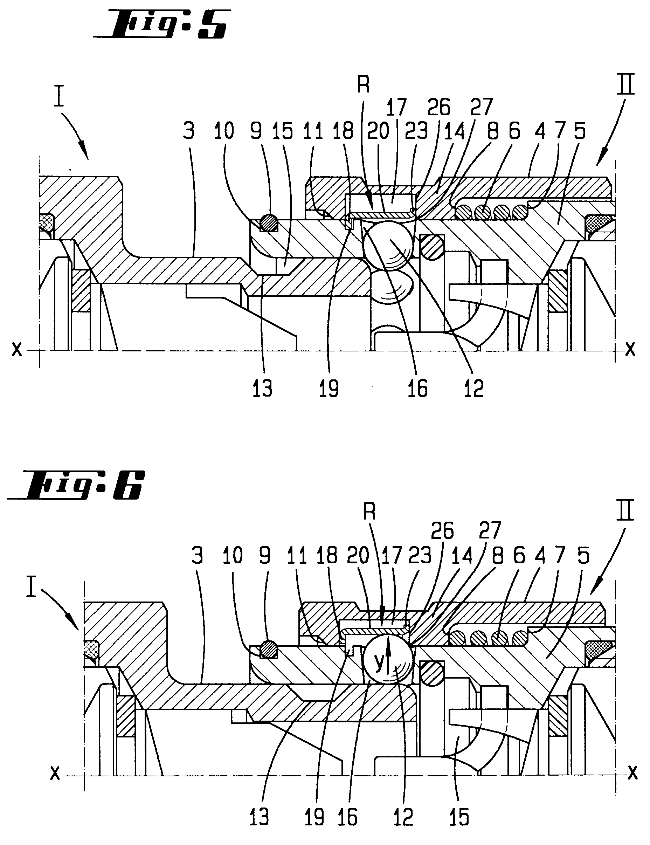

- Fig. 3: eine Stirnansicht gegen die eine Kupplungshälfte,
- Fig. 4: eine Stirnansicht gegen die andere Kupplungshälfte,
- Fig. 5: eine Herausvergrößerung im Bereich der Rasteinrichtung gemäß erstem Ausführungsbeispiel, und zwar bei abgestützt zurückverlagerter Betätigungshülse und beginnender Einführung des Stecknippels in eine Steckhöhlung des anderen Kupplungsteils,
- Fig. 6: eine gleiche Herausvergrößerung bei fortgeschrittener Steckverbindung der Kupplungshälften, eine Zwischenposition zwischen verriegelnd wirkender Betätigungshülse und Kugel wiedergebend,
- Fig. 6a: eine Darstellung ähnlich der Figur 6, wobei die Kugel in die tangierende Position zur Betätigungshülse übergeht und die solange aufrecht erhält, bis die Kugel zufolge der Ringnut des Nippels einwärts gerichtet ausweicht und die Hülse freigibt,
- Fig. 7: diese Situation bei abgeschlossener Steckverbindung der Kupplungshälften mit verriegelnd vorgeschnellter Betätigungshülse,

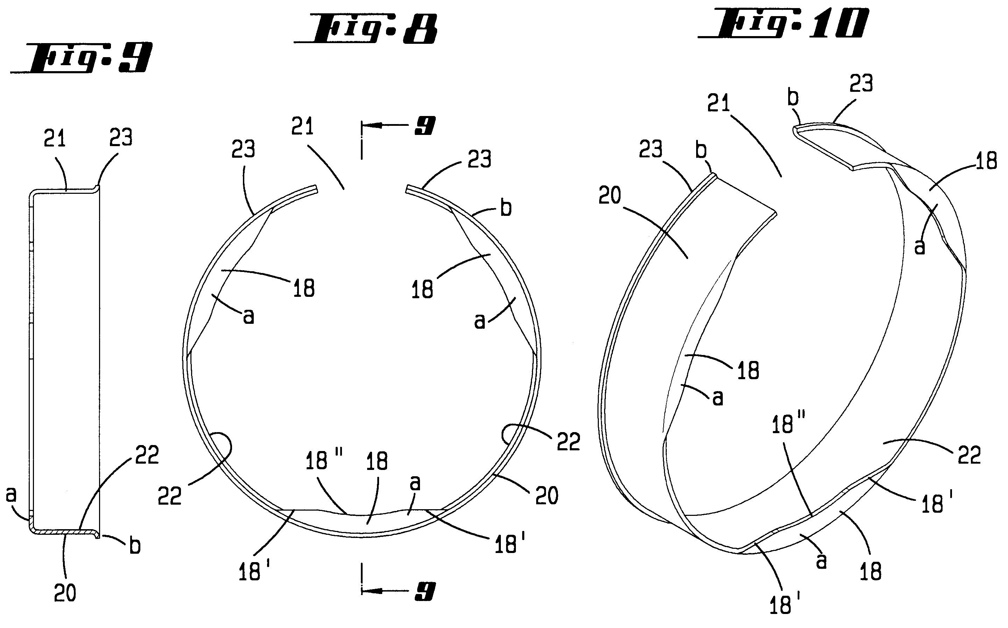

- Fig. 8: die Rastfinger an einem Federglied verwirklicht, und zwar in Form eines spaltoffenen Ringes dieser Rasteinrichtung,
- Fig. 9: den Schnitt gemäß Linie IX-IX in Fig. 8,
- Fig. 10: den Ring in perspektivischer Darstellung,
- Fig. 11: einen abgewandelten Ring in Perspektive, und zwar als Bestandteil eines zweiten Ausführungsbeispiels der Rasteinrichtung,
- Fig. 12: eine weitere Variante, gemäß der die Rastfinger von Prägungen gebildet sind, als Bestandteil eines dritten Ausführungsbeispieles der Rasteinrichtung,
- Fig. 13: diesen Ring in Zuordnung, und zwar in einer der Figur 5 entsprechenden Schnittdarstellung,
- Fig. 14: eine weitere Variante des Ringes in Perspektive, das vierte Ausführungsbeispiel der Rasteinrichtung verkörpernd,
- Fig. 15: eine weitere Variante des Ringes, und zwar in Form eines ein L-Profil aufweisenden, metallischen oder Kunststoff-Ringes, als fünftes Ausführungsbeispiel,
- Fig. 16: den Schnitt gemäß Linie XVI-XVI in Fig. 15,
- Fig. 17: diesen Ring in perspektivischer Darstellung,
- Fig. 18: diesen Ring der Rasteinrichtung zugeordnet, in Schnittdarstellung wie Figur 5,
- Fig. 19: eine zusätzliche Variante des Ringes, gemäß der die Rastfinger von freigeschnittenen und eingedrückten Ringfeldern gebildet sind, als Teil einer Rasteinrichtung in Form eines sechsten Ausführungsbeispiels, und zwar als Schnitt gemäß Linie XIX in Figur 20,
- Fig. 20: den Schnitt gemäß Linie XX - XX in Figur 19, gemäß der der Ring eine von der Kreisform abweichende Krümmung besitzt,
- Fig. 21: diesen Ring in Ansicht, in entspannter Stellung der Feder,
- Fig. 22: die Draufsicht hierzu,
- Fig. 23: den Ring im Einbauzustand mit aus der Rastnische ausgesteuerten Rastfingern,
- Fig. 24: die gleiche Darstellung, jedoch bei in die Rastnische sperrend eingetauchten Rastfingern,
- Fig. 25: eine Herausvergrößerung der im Wege des Freischnitts und der Eindrückung eines Ringfeldes erzeugten Rastfinger,
- Fig. 26: in perspektivischer Darstellung eine Variante eines Federgliedes in minimaler Umfangslänge, praktisch einen Bogenabschnitt darstellend, ein siebtes Ausführungsbeispiel der Rasteinrichtung verkörpernd,
- Fig. 27: diese Rasteinrichtung der Kupplung einverleibt, und zwar bei aus der Rastnische ausgesteuertem Rastfinger,
- Fig. 28: ein achtes Ausführungsbeispiel der Rasteinrichtung, und zwar in Form eines L-profilierten Ringes mit Querschnittsverstärkung im Profilscheitel mit den Scheitel querenden Schlitzen,
- Fig. 29: diesen Ring in perspektivischer Darstellung,
- Fig. 30: den Schnitt gemäß Linie XXX-XXX in Figur 28 und
- Fig. 31: eine der Figur 7 entsprechende, vergrößerte Schnittdarstellung als Verkörperung eines neunten Ausführungsbeispieles der anderen Kupplungshälfte der Kupplung mit verriegelnd vorgeschnellter Betätigungshülse.

Die dargestellte Kupplung K dient zur Verbindung medienführender Leitungen, insbesondere Rohrleitungen 1 und 2. Es kann sich bezüglich der Rohrleitungen 1 und 2 auch um Schläuche handeln.

Die Kupplung K umfaßt zwei Kupplungshälften bzw. -teile, bezeichnet mit I und II. Die erstgenannte Kupplungshälfte ist als Patrizenteil realisiert, weist also einen Stecknippel 3 auf. Der ist in verriegelnde Steckverbindung bringbar zur das entsprechende Matrizenteil bildenden Kupplungshälfte II.

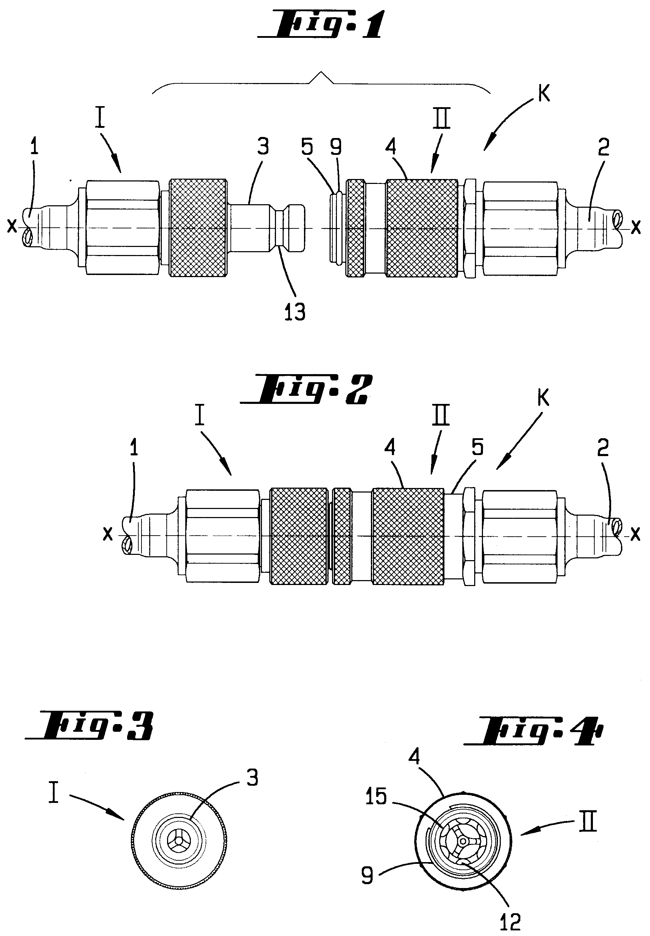

Zur entsprechenden Verriegelung dient eine Betätigungshülse 4 als Verriegelungshülse. Letztere ist auf dem Gehäuse 5 der Kupplungshälfte II axial anschlagbegrenzt verschieblich gelagert. In zusammengesteckter Position der Kupplungshälften I,II nimmt die Betätigungshülse 4 eine in Richtung der Kupplungshälfte I liegende, vorgeschobene Lage ein; in Kupplungsbereitschaftsstellung, wie sie aus Fig. 1 hervorgeht, ist die Betätigungshülse 4 dagegen etwas zurückverlagert und in dieser Position entgegen Federbelastung gehalten. Die die Betätigungshülse 4 belastende Feder 6 stützt sich an einer Ringschulter 7 des Gehäuses 5 ab.

Die andere endständige Federwindung der Feder 6 wirkt an einer Gegenschulter 8 der Betätigungshülse 4.

Die vorgeschobene Stellung der Betätigungshülse 4 ist durch einen Anschlag 9 gegeben. Es handelt sich um einen Sprengring. Dieser ist in einer Ringnut 10 im dortigen Endbereich des Gehäuses 5 zu etwa 2/3 seines Querschnitts aufgenommen. Der überragende Abschnitt bildet den erwähnten Anschlag 9. Die in einer Vertiefung liegende Anschlaggegenfläche der Betätigungshülse 4 ist mit 11 bezeichnet. Die Anschlagstellung in vorgeschobener Position der Betätigungshülse 4 ergibt sich deutlich aus Fig. 7.

In dieser Stellung hält die Betätigungshülse 4 Verriegelungsmittel 12 in sperrendem Eingriff zum Stecknippel 3. Bezüglich der Verrieglungsmittel handelt es sich um Kugeln, welche in Sperrstellung in eine Ringnut 13 des Stecknippels 3 eingesteuert sind. Ein entsprechender Einsteuervorsprung 14 ist an der Innenseite der Betätigungshülse 4 in Form einer Ringrippe realisiert. Der Rippenkamm führt sich auf einem zylindrischen, querschnittsabgesetzten Abschnitt des Gehäuses 5, in welchem Abschnitt das Gehäuse 5 eine zentrale zylindrische Steckhöhlung 15 für den Stecknippel 3 ausbildet. Das Verriegelungsmittel 12, respektive die Kugeln, weisen einen größeren Durchmesser auf als die Wandungsdicke zwischen der abgesetzten Mantelfläche und der Innenseite der besagten Steckhöhlung 15. Die Kugel ist etwa 1/3 dicker und steht in einer konischen Aufnahme 16 zur radialen Aus- und Einsteuerung zur Verfügung. Die in Vielzahl vorgesehene konische Aufnahme 16 bildet eine Art Kugelkäfig. Die konische Verjüngung liegt in Richtung der Steckhöhlung 15 und ist in ihrem Durchmesser so gewählt, daß die Kugeln unverlierbar zugeordnet sind.

Die Verriegelung wird durch Verlagerung der Betätigungshülse 4 in Richtung des Pfeiles Z aufgehoben. Das Verriegelungsmittel 12 verliert seine außenseitige Abstützung durch den Einsteuervorsprung 14. In die Querebene des Verriegelungsmittels 12 gelangt eine Vertiefung 17 in Form einer zum Inneren der Betätigungshandhabe 4 hin offenen Ringnut.

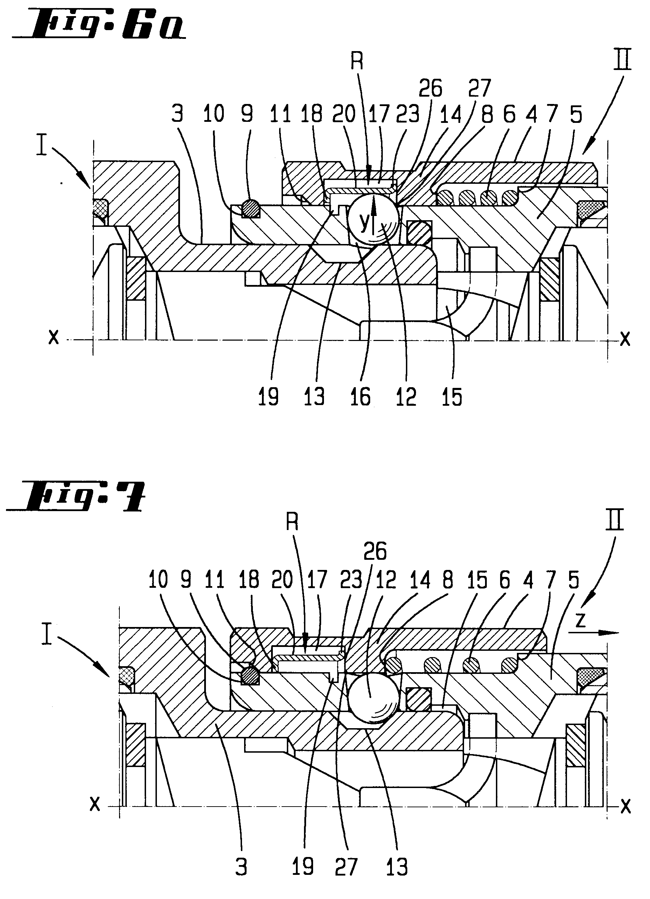

Die Vertiefung 17 nimmt eine Rasteinrichtung R auf, die die Betätigungshülse 4 in Freigabestellung (Fig. 5) festhält. Die Verrieglungsmittel 12 sind die Steuerteile der Rasteinrichtung R.

Das Rastmittel der in neun Ausführungsbeispielen realisierten Rasteinrichtung R ist ein Rastfinger 18 eines Federgliedes. Letzterer (18) liegt radial verschieblich im Bewegungsbereich des ebenfalls radial verschieblich gelagerten Verriegelungsmittels 12. Die radiale, senkrecht zu einer Längsmittelachse x-x der Kupplung K verlaufende Verschieberichtung ist durch Pfeil y angegeben. Der Rastfinger 18 steht in Gegenrichtung des Pfeiles y unter Federbelastung und kann vollständig in die Vertiefung 17 eingesteuert werden, so daß sich das senkrecht zur Längsmittelachse x-x der Kupplung K ausgerichtete Stirnende des Rastfingers 18 über der zylindrischen Mantelfläche des Gehäuses 5 befindet. Damit ist der Rastfinger 18 aus einer korrespondierenden Rastnische 19 der die Betätigungshülse 4 tragenden Kupplungshälfte II ausgetreten (vgl. Fig. 6). Das Verriegelungsmittel 12 hält dabei jedoch die Betätigungshülse 4 noch fest, indem der Einsteuervorsprung 14 durch die Kugel blockiert wird. Sobald jedoch die Ringnut 13 in die Querschnittsebene des Verriegelungsmittels 12, sprich Kugeln, gelangt, können letztere radial einwärts ausweichen, so daß es dann zum linksseitigen Vorschnellen der Betätigungshülse 4 kommt.

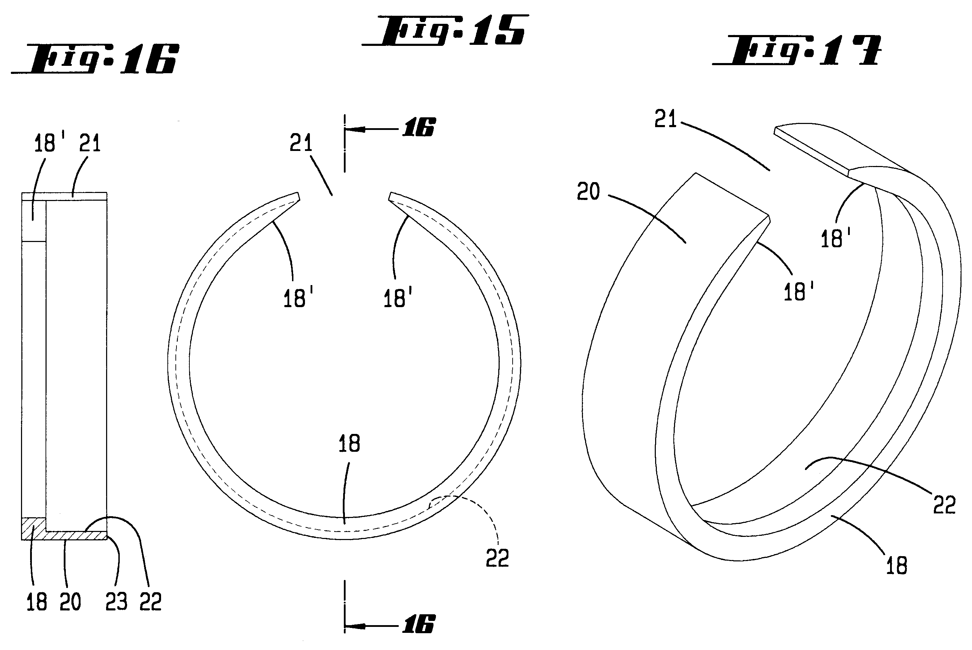

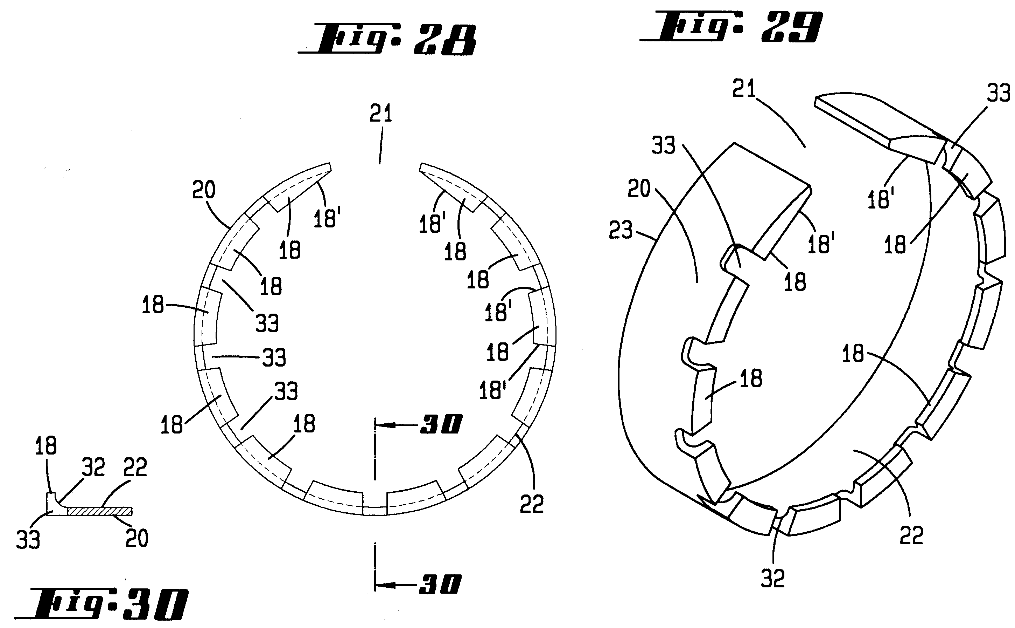

Der Rastfinger 18 ist außer im siebten Ausführungsbeispiel (Figuren 26,27) in Mehrzahl vorgesehen, gemäß Figur 15 sogar umlaufend durchgehend; vorzugsweise sind drei im wesentlichen winkelgleich verteilt angeordnete Rastfinger 18 an einem Ring 20 ausgebildet. Der Ring 20 ist von solcher Breite, daß er die lichte Breite der Vertiefung 17 unter Berücksichtigung eines erforderlichen Bewegungsspieles praktisch ausfüllt.

Das Verriegelungsmittel 12, sprich Kugel, drückt gegen die innere Umfangsfläche 22 des Ringes 20. Die Kugeln liegen in enger Folge, so daß eine rundum gegebene Aussteuerung vorliegt.

Der Ring 20 besteht aus federfähigem Material und ist im Interesse eines Anschmiegens an der Mantelfläche des abgesetzten Abschnitts des Gehäuses 5 vorgespannt. Die elastische Vorspannung ist ständig, also auch in der Situation gemäß Figur 5 gegeben. Der Ring 20 ist offen, bildet also einen spangenartigen Körper. Der Ringspalt trägt das Bezugszeichen 21 und erstreckt sich in Grundstellung des überwiegend kreisrunden Ringes 20 über einen Winkel von ca. 30 Grad. Der Ringspalt 21 liegt auf der Winkelhalbierenden zweier benachbarter Rastfinger 18.

Wie den Zeichnungen entnehmbar, erstrecken sich die Rastfinger 18 nur über Teilbereiche des Ring-Umfangs. Sie sind von Randabwinklungen a des Ringes 20 gebildet. Es handelt sich um eine rechtwinklige Abwinklung in Richtung des Ringinneren. Umfangsmäßig erstrecken sich die die Rastfinger 18 bildenden Abschnitte über einen Winkel von ca. 50 Grad. Die abwinklungsfreien Zwischenabschnitte 22 des Ringes 20 gehen über einen etwa gleichen Winkelbereich. Die in Umfangsrichtung liegenden Stirnenden der Rastfinger 18 keilen stufenlos bis auf das Maß der Wandungsdicke des Ringes 20 aus. Die diesbezüglichen Flanken der Rastfinger 18 sind mit 18' bezeichnet. Die Stirnseite 18'' der Rastfinger 18 folgt dem im wesentlichen kreisbogenförmigen Verlauf des Ringes 20.

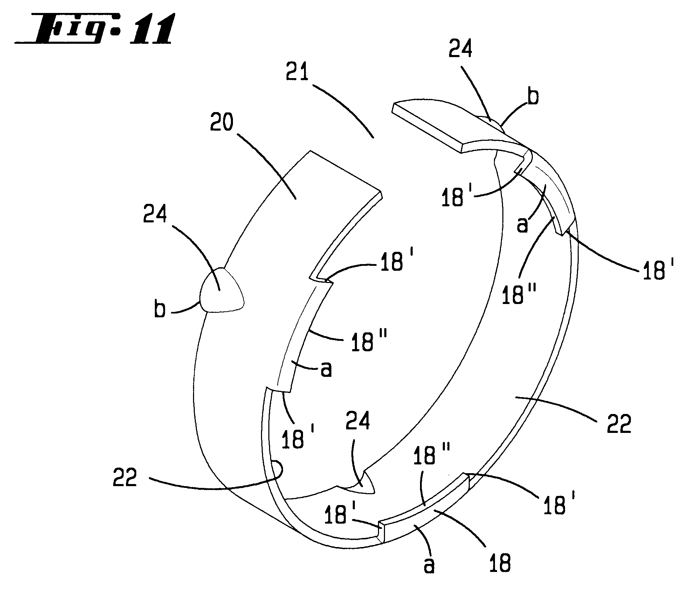

Wie Fig. 9 entnehmbar, weist der Ring 20 an der dem bzw. den Rastfingern 18 abgewandten Seite eine Stützflanke bzw. einen von einer randseitigen Gegenabwinklung b gebildeten, kurzen Stützkragen 23 auf. Der verleiht dem Ring 20 praktisch ein S-förmiges Querschnittsprofil. Der so flächenvergrößerte Randbereich des Ringes liegt an der ihm zugewandten Flanke der Vertiefung 17 an, welche Flanke vom Material des Einsteuervorsprunges 14 gebildet ist.

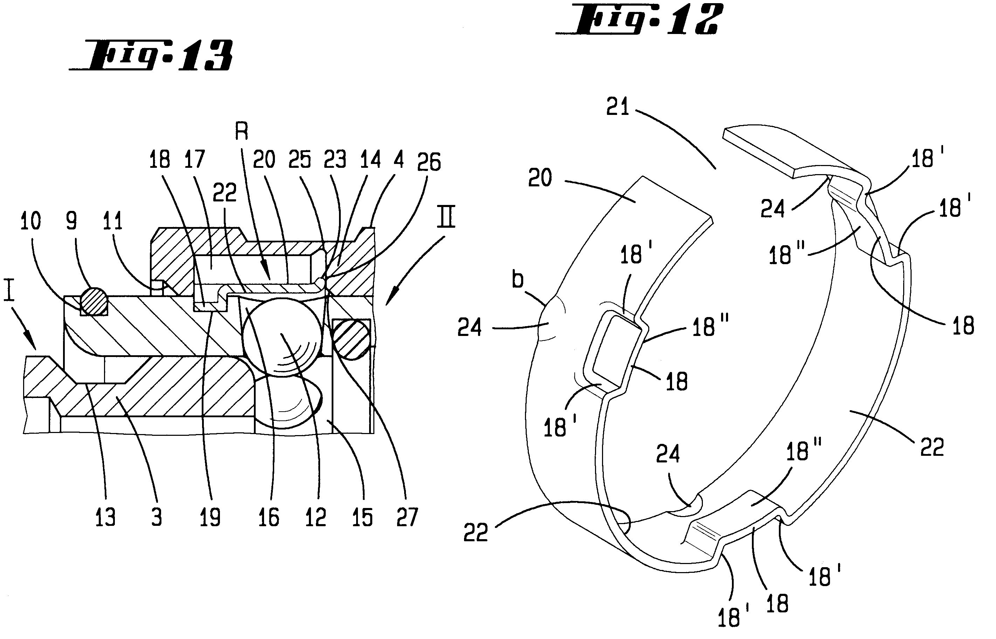

Die Gegenabwinklung b braucht nicht durchgehend zu verlaufen. Es genügt, wenn sie abschnittsweise vorliegt, zweckmäßig im Rücken der Rastfinger 18. Sie kann dann auch etwas in die Tiefe des Ringes 20 gehen, beispielsweise in Art muschelartiger Vorsprünge 24, wie sie sich aus Fig. 11 ergeben. Der Stirnrand bleibt dabei axial gerichtet und nicht wie gemäß Variante Fig. 9 radial auswärts gerichtet.

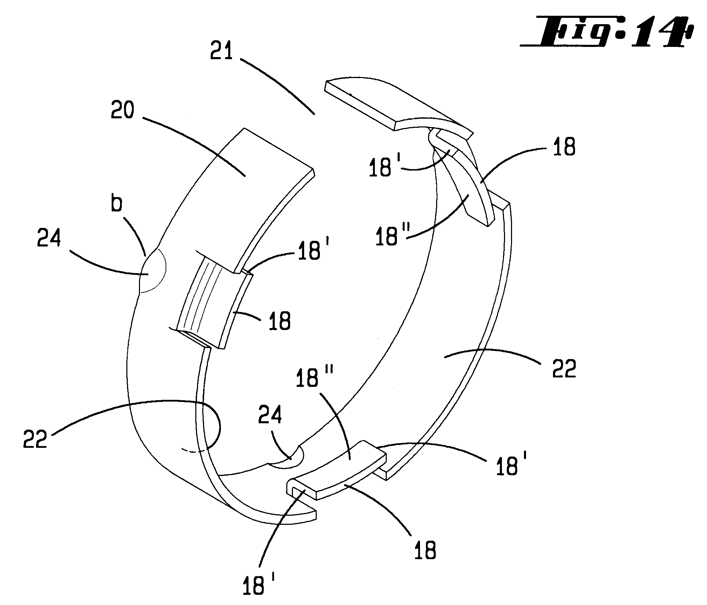

Die so mehr einer tiefziehenden Prägung vergleichbare Ausbildung ist gemäß Variante Fig. 12 und 13 auch bezüglich der Rastfinger 18 angewandt. Letztere erstrecken sich über die Umfangfläche, und zwar noch innerhalb der Breite des Ringes 20 liegend. Die axiale Tiefe entspricht der Breite der Rastnische 19. Es handelt sich unter Beibehaltung der Ringform um im Grunde trapezförmige Einziehungen, wobei die Trapezflanken zur Mitte des Ringes 20 hin konvergieren.

Auch bei dieser Lösung sind im Rücken der Rastfinger 18 muschelartige Vorsprünge 24 realisiert in auswärts gerichteter Ausprägung.

Der Ring gemäß Fig. 14 läßt die besagten Flanken der durch Prägung erzeugten Rastfinger in Fortfall. Es handelt sich daher lediglich um winkelförmig gestaltete, freigeschnittene Lappen. Hier und auch bei der Variante gemäß Fig. 12 sind die Flanken 18' der Rastfinger 18 praktisch radial einwärts gerichtet; sie keilen nicht, wie in Fig. 9 dargestellt und beschrieben, aus. Die Ecken der Rastfinger 18 sind natürlich gefast, um einen Hobeleffekt zu vermeiden, wenn der Ring 20 in frei drehbarer Zuordnung zugeordnet ist.

In den an Fig. 9 anschließenden Metall-Ringvarianten sind die Rastfinger 18 umfangsmäßig etwas kleiner gestaltet mit entsprechend größer ausfallenden, unversteiften Zwischenräumen 22.

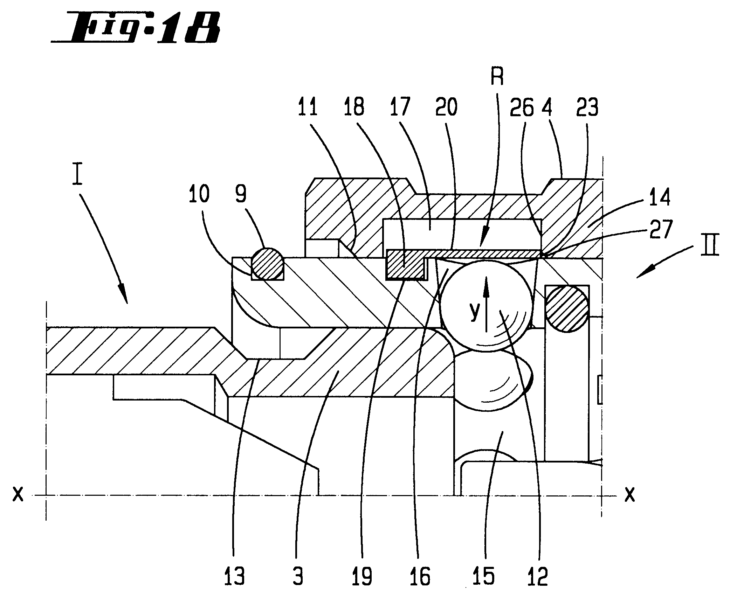

In den Fig. 16 bis 18 liegt insofern eine im Prinzip gleiche, baulich doch abweichende Variante vor, als dort der Ring als Kunststoffring gestaltet ist. Der hat ein L-förmiges Profil. Der kürzere L-Schenkel stellt den Rastfinger 18 dar; der längere L-Schenkel ist der eigentliche Ringkörper, welcher mit seinem dem Rastfinger 18 abgewandten Stirnrand die dem Stützkragen 23 bzw. Vorsprung 24 entsprechende Stützfläche formt.

Der kürzere L-Schenkel keilt vor dem Ringspalt 21 auf die Dicke des längeren L-Schenkels aus. Die beiden Flanken tragen das Bezugszeichen 18'.

Um zu vermeiden, daß bei Montage oder Demontage der Rastfinger 18 in die Ringnut 10 gerät, ist die Breite der Ringnut 10 kleiner bemessen als die in Achsrichtung liegende Eingriffslänge der Rastfinger 18. Bei der Ausführungsform gemäß Fig. 5 ff. könnte die Ringnut 10 durch ein die Mantelwand des abgesetzten Abschnitts des Gehäuses nicht überragendes, ebenengleich damit verlaufendes Füllstück überbrückt werden.

In Fällen, in denen der Ring eine Gegenabwinklung b aufweist, kann, wie aus Fig. 13 ersichtlich, der Grund der Vertiefung 17 eine das Eintauchen des Stützkragens etc. erlaubende Ausdrehung 25 aufweisen.

Die Kupplung K weist Verschlußorgane auf, die sich in Kupplungsstellung der beiden Kupplungshälften I,II von ihren Ventilsitzflächen abheben, so daß das Medium die Kupplung K durchströmen kann.

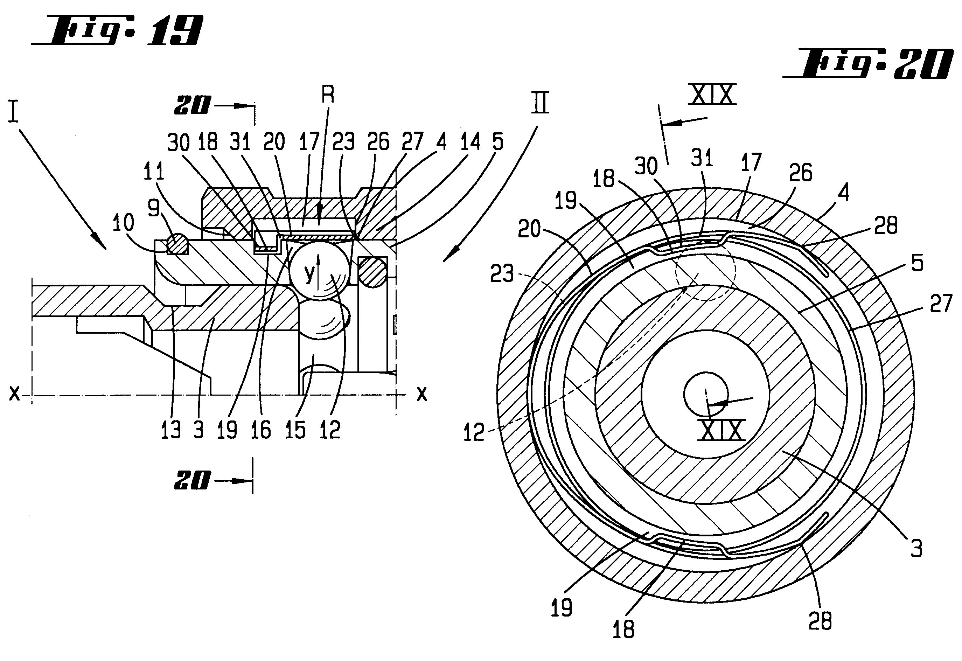

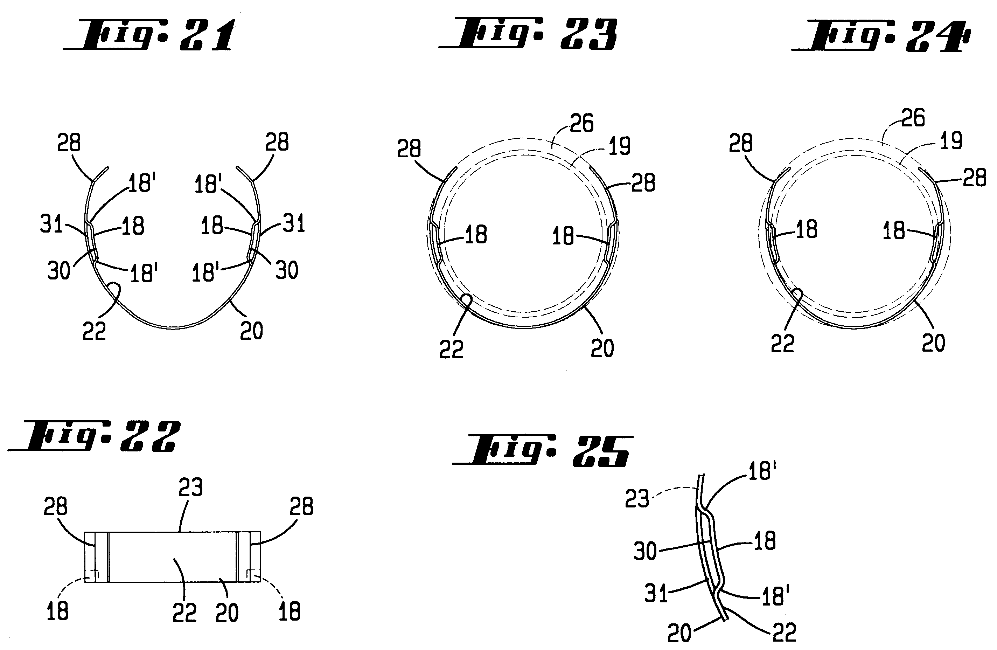

Liegt eine Kupplung K vor, in der eine Ausdrehung 25 eine nicht vertretbare Schwächung der Betätigungshülse 4 mit sich brächte, trotzdem aber ein recht großer Stützkragen 23 erreicht werden soll, so bietet sich das in den Figuren 19 bis 27 dargestellte Federglied an. Dessen Ring geht wiederum von einem ebenflächigen Blattfederkörper aus; der dem Einsteuervorsprung 14 zugewandte Stirnrand als Stützkragen 23 bleibt hier also axial gerichtet. Er ist weder zu einem kurzen Stützkragen 23 nach auswärts abgebogen, noch besitzt er muschelartige Vorsprünge 24. Vielmehr ist hier so verfahren, daß der Ring 20 eine von der Kreisform abweichende Krümmung besitzt. Letztere ist dergestalt, daß eine Teillänge sich über den kleinsten und eine Teillänge sich über den größeren Durchmesser der vom Einsteuervorsprung 14 gebildeten Flanke bzw. Anlagefläche 26 der Betätigungshülse 4 erstreckt.

Gemäß sechstem Ausführungsbeispiel ist die Gesamterstreckung des Ringes 20 etwa in Gestalt eines Hufeisens gekrümmt. Die entspannte Stellung dieses Ringes 20 geht aus Figur 21 hervor. Die dortige Silhouette ist auch einem frontalen Gesichtsprofil vergleichbar. Der entsprechende Umriß ergibt im Einbauzustand und bei in die Rastnische 19 sperrend eingetauchten Rastfingern 18 relativ steile Überdeckungen an der Anlagefläche 26, etwa mittig zwischen der Radialen und dem Rundungsverlauf der Anlagefläche liegend. Hierbei liegt vor allen Dingen überwiegend eine fugenferne Abstützung vor. Das querschnittsdünne Band des Ringes 20 nützt abstützmäßig also vorrangig die radiale Erstreckung der Vertiefung 17 für die erwähnte Abstützung. Obwohl, wie das beispielsweise aus Figur 19 hervorgeht, der Stirnrand des Stützkragens 23 in der dargestellten Schnittebene praktisch im Bereich einer dort eingezeichneten Fase 27 liegt, kommt es nicht zu einem verklemmenden Einzwängen, da die anderen Bereiche des erwähnten Stirnrandes eine ausreichende Abstützung an der Anlagefläche 26 des Einsteuervorsprungs 14 finden.

Selbst eine flache Wellstruktur des Ringes 20 ist denkbar. Der Ringspalt 21 ist dann entsprechend groß zu bemessen.

Bei der dargestellten symmetrischen Hufeisenform sind es vor allem die freien Enden des hufeisenförmigen Ringes 20 und die enger gewölbte Scheitelzone des Ringes 20, welche die erstrebten Überdeckungszonen bringen.

Bezüglich der freien, d.h. dem Ringspalt 21 des Ringes 20 zugewandten, Enden ist noch eine weitere Vorkehrung dahingehend getroffen, daß die einander zugewandten Enden des Ringes 20 wieder in Richtung der Kreisform einwärts abgewinkelt bzw. eingebogen sind. So entsteht eine stumpfwinklige, eckige Stützklaue mit peripherem Abstützfirst 28, dessen Firstlinie raumparallel zur Längsmittelachse x-x der Kupplung K verläuft. Die Endkante steht dabei vom Grund der Vertiefung 17 ab. Es kommt dadurch im Falle einer Drehbewegung der Teile zueinander nicht zu einer hobelnden Wirkung.

Wie dem siebten Ausführungsbeispiel entnehmbar, kann der hier nicht mehr als Ring zu bezeichnende Bogenabschnitt praktisch auf die Länge eines Viertelkreises reduziert sein. Auch hier greift die oben im einzelnen erläuterte axial orientierte Abstützung dieses Federgliedes. Dort sind beide Enden in der geschilderten Weise in Richtung des Kreisinneren abgewinkelt, gleichfalls unter Bildung von Abstützklauen mit peripherem Abstützfirst 28. Hier ist die gleiche Art der Verrastung wie bei allen vorgenannten Federgliedern praktiziert. Die Bezugsziffern sind sinngemäß angewandt. Trotz der in Umfangsrichtung relativ geringen Länge des Federgliedes - es liegt praktisch gerade die Länge eines Schenkels der Hufeisenform gemäß Fig. 21 vor -, behält es seine betriebsgerechte Lage bei. Eine besondere Arretierung ist nicht erforderlich. Das Federglied verrastet und entsperrt in jeder Drehlage des Federgliedes zu den Kugel-Aufnahmen 16 hin. Die Lagesicherung wird voll übernommen durch die umlaufenden, in einfacher Weise herstellbare Rille als Rastnische 19 der auch hier die Verriegelungsmittel, sprich Kugeln 12, äußerlich umgreifend zugeordneten Rasteinrichtung R.

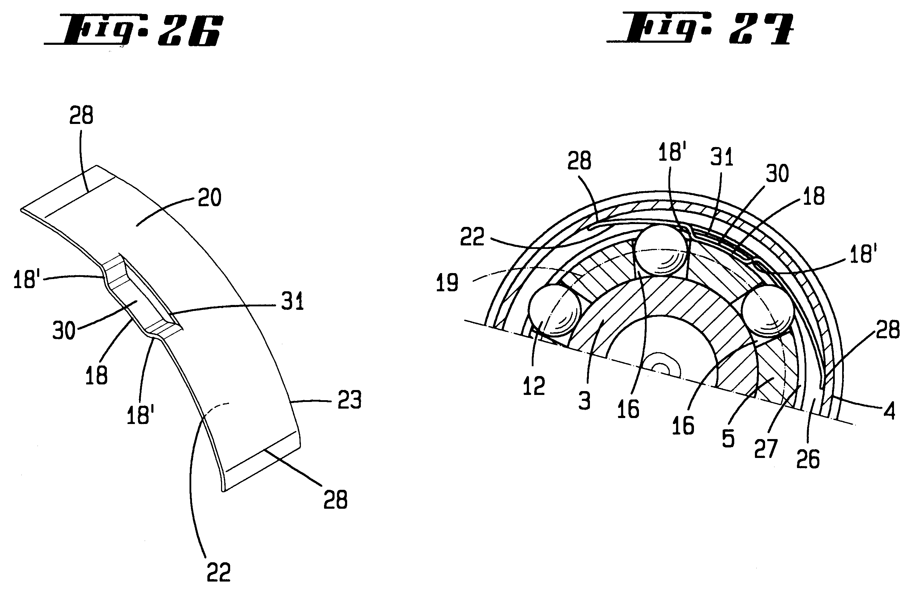

Was beim sechsten und siebten Ausführungsbeispiel der Kupplung K die Rastfinger 18 betrifft, so ist hier eine Abwandlung insofern vorgenommen, als die Rastfinger 18 nun aus freigeschnittenen und eingedrückten Ringfeldern 30 bestehen. Der in Umfangsrichtung liegende Freischnitt 31 läßt auch hier die in den vorangegangenen Beispielen mit 18' bezeichneten Flanken entstehen, welche den in Ringumfangsrichtung liegenden Enden zusammen mit der Eindrückung eine trapezförmige Struktur verleihen (vergleiche Figuren 25 und 26). Die Flanken sind auch hier mit 18' bezeichnet.

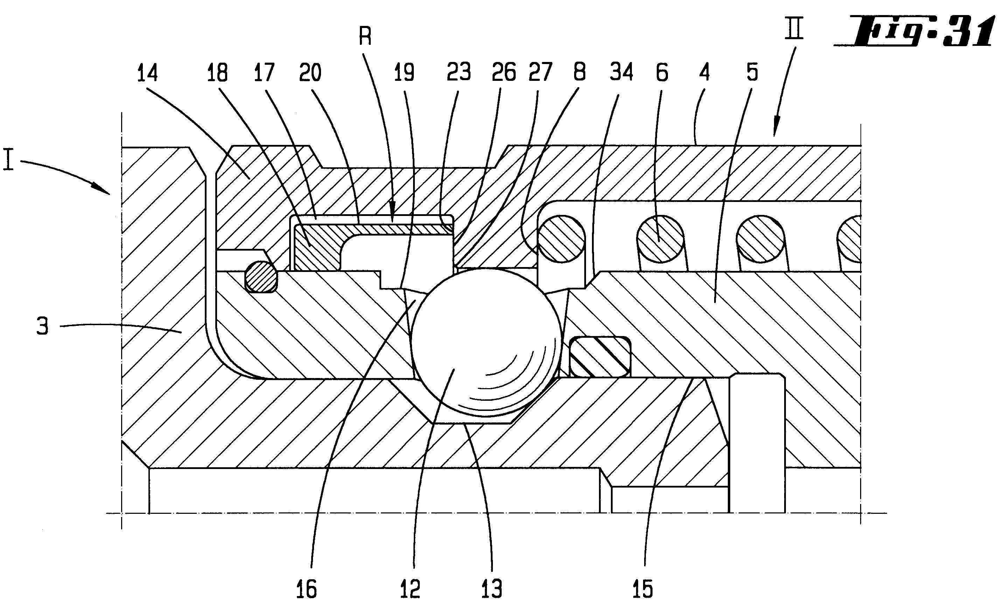

Der Ring 20 gemäß dem achten und neunten Ausführungsbeispiel (Figuren 28 bis 31) entspricht in seinem baulichen Erscheinungsbild dem des fünften Ausführungsbeispieles (Figuren 15 bis 18), nur daß es sich hier nicht um einen Kunststoffring handelt, sondern um einen gedrehten, geöffneten Metallring. Auch dieser ist L-förmig profiliert, weist also einen kürzeren und einen längeren L-Schenkel auf. Der kürzere L-Schenkel fungiert als Rastfinger 18. Außerdem sind auch hier die Enden des kürzeren L-Schenkels in Richtung des Ringspaltes 21 keilförmig auslaufend gestaltet, und zwar bis auf die Wandungsdicke des längeren L-Schenkels unter Erzielung der entsprechend erläuterten Funktion. Der Innenscheitel zwischen den L-Schenkeln heißt 32.

Um trotz der hier weniger federfreudig, d.h. härter ausgebildeten Ringstruktur eine gut verteilte Federwirkung sicherzustellen, ist der weitere Aufbau dieses Ringes 20 so, daß im Bereich des kürzeren L-Schenkels eine geordnete Materialreduzierung vorgenommen ist. Konkret ist das so, daß im Bereich des kürzeren L-Schenkels reihenförmig nebeneinanderliegende, radiale Schlitze 33 gefräst sind. Diese unterteilen den umlaufenden kürzeren L-Schenkel in viele zahnartige Rastfinger 18. Besagte Schlitze 33 reichen bis in den Wurzelbereich des im rechten Winkel anschließenden längeren rotationssymmetrischen L-Schenkels.

Die Schlitze 33 sind in gleiche Winkelabstände gelegt. Für die Rastfinger 18 selbst ist eine hohe Stabilität erzielt, indem der Innenscheitel 32 zwischen längerem und kürzerem L-Schenkel zu einer konkav ausgerundeten Kehle ausgefüllt ist, was die erstrebte Verstärkung erbringt und eine Kerbwirkung, wie sie bei lediglich abgewinkeltem Material entstehen könnte, ausschließt.

Die Bezugsziffern sind in den vier letzten Ausführungsbeispielen sinngemäß angewandt, soweit bauliche Übereinstimmung zu den voraufgegangenen fünf Ausführungsbeispielen besteht, und zwar z. Teil ohne textliche Wiederholungen.

Zuammenfassend bleibt festzuhalten, daß die Federglieder der Rasteinrichtung R, selbst wenn sie bloß aus einem bogenartig gekrümmten, relativ kurzen Federabschnitt bestehen und selbst mit nur einem daran befindlichen, zum Inneren des Bogens gerichteten Rastfinger 18 ausgestattet sind, voll funktionsfähig sind. Selbst der Stützkragen 23 kann aus einer lediglichen Stützflanke an dem radial verschieblich zugeordneten Rastmittel realisiert sein.

Die Kupplung gemäß neuntem Ausführungsbeispiel (Figur 31) zeigt an der das Matrizenteil bildenden, anderen Kupplungshälfte II noch eine Besonderheit. Sie besteht baulich darin, daß die Rastnische 19 ganz oder teilweise den Raumbereich der konischen Aufnahmen 16 überdeckt. Die Rastnische 17 endet also nicht, wie beispielsweise in Figur 5 dargestellt, im Abstand zum mantelwandseitigen Rand der sich peripher weitenden Aufnahmen 16. Um solche Kupplungen auch ohne ein zusätzliches Montage-/Demontage-Hilfsmittel, das in die Ringnut 10 eingelegt wird, montieren bzw. demontieren können, erweist sich diese praktisch extreme Verbreiterung der Rastnische 19 als vorteilhaft.

Unter bestimmten räumlichen Gegebenheiten ist die wünschenswerte breitere Dimensionierung der Rastnische 19 gegenüber der Ringnut 10 nämlich nicht möglich. Die räumliche Beschränkung resultiert dabei aus einem unliebsamen Entstehen scharfer Durchdringungskanten zwischen der Rastnische 19 und den konischen Aufnahmen 16 für die Verriegelungsmittel 12. Hier hilft die erwähnte Verbreiterung der Rastnische 19 ab. Obwohl schon eine nur teilweise Überbrückung schon eine Hilfe ist, wird gemäß Darstellung Figur 31 eine Ausdehnung derselben derart bevorzugt, daß die Rastnische 19 den Raumbereich der konischen Aufnahme 16 vollständig überdeckt, wodurch folglich die unliebsamen scharfen Durchdringungskanten zwischen Rastnische 19 und konischen Aufnahmen 16 ganz vermieden sind.

Die Randbeabstandung der Flanken der Rastnische 19 in der Axialen ist gleich. Auch hier kann die Rastnische 19 durch Drehen erzeugt werden.

Weiter ist an dem neunten Ausführungsbeispiel noch die Maßnahme getroffen, daß die Rastnische 19 an der in Steckrichtung tieferliegenden Flanke einen Schrägauslauf 34 aufweist. Dieser steht im Winkel von ca. 45° zur Längsmittelachse x-x. Die Verjüngung dieses Flankenverlaufs liegt in Richtung der Mündung der Steckhöhlung 15. Die Bedeutung des Schrägauslaufs 34 gilt in Fällen, in denen infolge ungünstiger Toleranzfeldfestlegungen zwischen dem Gehäuse 5 und der Betätigungshülse 14 ein gerader Auslauf anstelle des dargestellten Schrägauslaufs 34 eine Bewegungsbehinderung bewirken könnte.

Alle offenbarten Merkmale sind erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen.

## Patentansprüche

1. Kupplung (K) zur Verbindung von Leitungen, insbesondere medienführender Leitungen (1,2), bestehend aus zueinander in Steckverbindung bringbaren Kupplungshälften (I,II), von denen die eine eine auf dem Gehäuse (5) ihrer Kupplungshälfte (II) axial verschiebliche Betätigungshülse (4) zur Verrieglung der zusammengesteckten Position beider Kupplungshälften (I,II) aufweist, welche (4) in ihrer Freigabestellung über eine Rasteinrichtung (R) derart verrastet ist, daß das Einstecken der anderen Kupplungshälfte (I) diese Verrastung aufhebt und die Betätigungshülse (4) zum federbelasteten Übertritt in die Verriegelungsposition freigibt, in welcher die Betätigungshülse (4) Verriegelungsmittel (12) beaufschlagt, die am Stecknippel (3) der eingesteckten Kupplungshälfte (I) verriegelnd eingreifen, dadurch gekennzeichnet, daß die Verriegelungsmittel (12) Steuerteile ("Befehlsgeber") der Rasteinrichtung (R) sind.

2. Kupplung nach Anspruch 1 oder insbesondere danach, dadurch gekennzeichnet, daß die Rastmittel der Rasteinrichtung (R) aus wenigstens einem Rastfinger (18) bestehen, der, in der Betätigungshülse (4) radial verschieblich, im Bewegungsbereich des Verriegelungsmittels (12) liegt.

3. Kupplung nach einem oder mehreren der vorhergehenden Ansprüche oder insbesondere danach, dadurch gekennzeichnet, daß der Rastfinger (18) aus einer zum Inneren der Betätigungshülse (4) hin offenen Vertiefung (17) ragt und in eine Rastnische (19) der die Betätigungshülse (4) tragenden Kupplungshälfte (II) durch Federbelastung eingreift.

4. Kupplung nach einem oder mehreren der vorhergehenden Ansprüche oder insbesondere danach, dadurch gekennzeichnet, daß der Rastfinger (18) als Randabwinklung (a) eines in der Vertiefung (17) liegenden Ringes (20) aus federndem Material gestaltet ist und daß das als Kugel realisierte Verriegelungsmittel (12) auf die innere Umfangsfläche des Ringes (20) drückt.

5. Kupplung nach einem oder mehreren der vorhergehenden Ansprüche oder insbesondere danach, dadurch gekennzeichnet, daß der Ring (20) durch einen Ringspalt (21) unterbrochen ist und unter ständiger elastischer Vorspannung auf dem Gehäuse (5) sitzt.

6. Kupplung nach einem oder mehreren der vorhergehenden Ansprüche oder insbesondere danach, dadurch gekennzeichnet, daß mehrere Rastfinger (18) sich über Teilbereiche des Ringumfangs erstrecken.

7. Kupplung nach einem oder mehreren der vorhergehenden Ansprüche oder insbesondere danach, dadurch gekennzeichnet, daß der oder die Rastfinger (18) als Profilierungsabschnitt der Umfangsfläche des Ringes (20) gestaltet ist bzw. sind (Fig. 12).

8. Kupplung nach einem oder mehreren der vorhergehenden Ansprüche oder insbesondere danach, dadurch gekennzeichnet, daß der Ring (20) an der dem Rastfinger (18) abgewandten Seite einen von einer Gegenabwinklung (b) des Ringes (20) gebildeten Stützkragen (23) aufweist.

9. Kupplung nach einem oder mehreren der vorhergehenden Ansprüche oder insbesondere danach, dadurch gekennzeichnet, daß die Rastfinger (18) an einem L-profilierten Kunststoffring ausgebildet sind und der die Rastfinger bildende kürzere L-Schenkel spaltseitig auf die Dicke des längeren L-Schenkels auskeilt.

10. Kupplung nach einem oder mehreren der vorhergehenden Ansprüche oder insbesondere danach, dadurch gekennzeichnet, daß die Betätigungshülse (4) in ihrer vorgeschobenen Position gegen einen Anschlag (9) trifft, der in eine Ringnut (10) des Gehäuses (5) eingesprengt ist, wobei die Breite der Ringnut (10) kleiner ist als die in Achsrichtung liegende Eingriffslänge der Rastfinger (18).

11. Kupplung nach einem oder mehreren der vorhergehenden Ansprüche oder insbesondere danach, dadurch gekennzeichnet, daß der Ring (20) eine von der Kreisform abweichende Krümmung besitzt derart, daß eine Teillänge sich über den kleinsten und eine Teillänge sich über den größeren Durchmesser einer Anlagefläche (26) der Betätigungshülse (4) erstreckt.

12. Kupplung nach einem oder mehreren der vorhergehenden Ansprüche oder insbesondere danach, dadurch gekennzeichnet, daß die Gesamterstreckung des Ringes (20) etwa eine Hufeisenform darstellt.

13. Kupplung nach einem oder mehreren der vorhergehenden Ansprüche oder insbesondere danach, dadurch gekennzeichnet, daß die dem Ringspalt (21) zugewandten Enden des Ringes (20) wieder in Richtung der Kreisform abgebogen/-gewinkelt sind.

14. Kupplung nach einem oder mehreren der vorhergehenden Ansprüche oder insbesondere danach, dadurch gekennzeichnet, daß die Rastfinger (18) aus freigeschnittenen und eingedrückten Ringfeldern (30) bestehen.

15. Kupplung nach einem oder mehreren der vorhergehenden Ansprüche oder insbesondere danach, dadurch gekennzeichnet, daß der L-profilierte Ring (20) im Bereich seines kürzeren L-Schenkels durch reihenförmig hintereinanderliegende Schlitze (33) unterteilt ist, welche bis in den längeren L-Schenkel reichen.

16. Kupplung nach einem oder mehreren der vorhergehenden Ansprüche oder insbesondere danach, dadurch gekennzeichnet, daß der Innenscheitel (32) zwischen dem längeren und dem kürzeren L-Schenkel zu einer Kehle ausgefüllt ist.

17. Kupplung nach einem oder mehreren der vorhergehenden Ansprüche oder insbesondere danach, dadurch gekennzeichnet, daß die Rastnische (19) ganz oder teilweise den Raumbereich der konischen Aufnahme (16) überdeckt.

18. Kupplung nach einem oder mehreren der vorhergehenden Ansprüche oder insbesondere danach, dadurch gekennzeichnet, daß die Rastnische (19) an der in Steckrichtung tieferliegenden Flanke einen Schrägauslauf (34) aufweist.
